# EUROPÄISCHE PATENTSCHRIFT

(11) **EP 1 196 711 B1**
(45) Veröffentlichungstag und Bekanntmachung des Hinweises auf die Patenterteilung: **13.10.2004**
(21) Anmeldenummer: 00942149.6
(22) Anmeldetag: 30.06.2000
(51) Int. Cl.: F16L 25/02

(54) **AXIALER, KRYOTECHNISCH GEEIGNETER POTENTIALTRENNER**
AXIAL POTENTIAL SEPARATOR, SUITABLE FOR CRYOTECHNICS
ISOLATEUR AXIAL CONVENANT A LA CRYOTECHNIQUE

(30) Priorität: 16.07.1999 DE 19933352
(43) Veröffentlichungstag der Anmeldung: 17.04.2002
(73) Patentinhaber: Forschungszentrum Karlsruhe GmbH, 76133 Karlsruhe (DE)
(72) Erfinder: FINK, Stefan, D-77656 Offenburg (DE); FRIESINGER, Günter, D-76344 Eggenstein-Leopoldshafen (DE)
(86) Internationale Anmeldenummer: PCT/EP2000/006111
(87) Internationale Veröffentlichungsnummer: WO 2001/006526

(56) Entgegenhaltungen:
- CH-A- 575 096
- CH-A- 609 137
- US-A- 3 627 357
- US-A- 4 960 296
- US-A- 5 139 288

## Beschreibung

Die Erfindung betrifft ein Kühlsystem einer kryotechnischen, heliumgekühlten Anlage mit einer metallischen Rohrführung und einem axialen Potentialtrenner aus einem dielektrischen Rohrstück in der Rohrführung zur Verhinderung der Ausbildung unerwünschter elektrischer Strompfade.

Beim Abschalten von kryogenen Großmagneten treten hohe Spannungen von einigen 10 kV auf. Innerhalb der Rohrleitungen des Kühlsystems, das für flüssiges Helium als Kühlmittel konzipiert ist, muß neben der Potentialtrennung auch die Vakuumdichtigkeit bei inneren Überdrücken von ca. 20 bar gesichert sein. Ein dielektrisches Rohrstück als Potentialtrenner verhindert die Ausbildung unerwünschter Strompfade, welche zu Betriebsstörungen, Gefährdung von Personal und Betriebsmitteln führen.

Potentialtrenner sind auch von ihrer physikalischen Eigenschaft her als Isolierverbinder bei Metallrohrsystemen bekannt. Sie dienen, da dielektrisch, als Stromkreisunterbrecher, sind also Bauglieder mit sehr hohem elektzrischen Widerstand (siehe CH 575096).

Ein Kupplungsstück für die elektrische und thermische Isolation unter Hochdruck und kryogenen Bedingungen wird in der US 5,139,288 vorgestellt. Es besteht aus einem spiegelbildlichen und rotationssymmetrischen dielektrischen Hohlzylinderstück mit zwei verschiedenen lichten Weiten auf der Achse. Dieses Isolationsstück wird zwischen zwei metallischen Rohrstücken mit je einer Verschraubung an den beiden freien Enden verspannt, so dass eine nach außen hin hermetisch dichte Rohrverbindung zwischen beiden Rohrstücken besteht. Über die beiden Verschraubungen kann dieses Kupplungsstück in einen Kreislauf aus Rohren eingespannt werden und elektrisch unterschiedliche Potentialbereich strömungstechnisch gekoppelt werden. Gleichzeitig ist der Wärmetransport über dieses Kupplungsstück unterbunden, bzw. auf ein tolerables Maß beschränkt.

Bisher werden Potentialtrenner für den kryogenen Aufgabenbereich - Temperaturen von etwa 4 K - mit einem Isolatorteil aus glasfaserverstärktem Kunststoff (GFK) von Hand gefertigt. Hierzu werden zuerst die beiden Metallelektroden auf ein GFK-Rohr aufgesteckt, danach wird der Isolatorteil aus einer geeigneten Kombination von Glasgewebe und Glasfilamentrovings in mehreren Arbeitsschritten mit Epoxidharz laminiert, dabei ist zu beachten, daß die Materialeigenschaften von Handwickel und GFK-Rohr gleich sind und der über die Ausrichtung der Verstärkungsfasern und über den Glasanteil beeinflußbare Ausdehnungskoeffizient des Wickels möglichst dem der Metallelektrode entspricht. Ein solches Modell auf Epoxidharzbasis ist von: Irmisch, M; Ulbricht, A. unter dem Titel "Hochspannungskomponenten für die supraleitende Poloidalfeld-Modellspule POLO" in FZK Wissenschaftliche Berichte FZKA 5568, 1996 beschrieben.

Die Qualität der Fertigung mit handgewickelten GFK-Anordnungen ist stark vom handwerklichen Können von Spezialisten abhängig. Damit ist die industrielle Verfügbarkeit nicht gegeben. Hohe Stückzahlen können deshalb bisher nicht kurzfristig bereit gestellt werden. Die Versorgungssicherheit ist bis heute gering. Für die industrielle Fertigung auf einer Filamentwickelmaschine, die der Herstellung des Handlaminierverfahrens in etwa entspricht, liegen bisher keine Erfahrungen vor. Kommerziell erhältlich sind Potentialtrenner auf Keramikbasis.

Der Erfindung liegt die Aufgabe zugrunde, in einer kryotechnischen Einrichtung für supralleitende Zwecke mit Helium als Kühlmittel sich möglicherweise ausbildende elektrische Hochspannungspotentiale auf ein vorgegebenes Gebiet zu begrenzen und gleichzeitig einen Kühlmittelkreislauf zwischen beiden Gebieten aufrecht zu erhalten. Eine Baukomponente, die das leistet, soll aus industriell herstellbaren Bauelementen bestehen, mit denen im Zusammenbau die elektrischen und vakuumstechnischen Eigenschaften eingerichtet werden können.

Die Aufgabe wird durch ein in die metallische Rohrführung des Kühlsystem der kryotechnischen, heliumgekühlten Anlage eingesetztes, konfektioniertes dielektrisches Rohrstück, dem Potentialtrenner, mit dem Aufbau aus Bauelementen gemäß den Kennzeichen des Anspruchs 1 gelöst.

Als dielektrisches Rohrstück 1 zur Einrichtung der Strecke der Potentialdifferenz bewährt sich ein einfaches, zylindrisches dielektrisches, bei Temperaturen flüssigen Heliums noch abdichtendes Rohr aus Polyimid mit planen Stirnflächen, das für eine Stützringeinlage in beiden Endbereich jeweils eine Ringnut 3 im Außenmantel hat. Polyimid dichtet bei diesen tiefen Temperaturen noch zuverlässig.

In den beiden Endbereichen koppeln die beiden Elektroden 6 an dem zugehörigen Flansch 5 an. Gekoppelt wird der Flansch 5 am ankommenden Ende des Metallrohrs über eine lösbare Verbindungstechnik mit der Elektrode 6. Im Zusammenbau werden zunächst beide Elektroden 6 auf das dielektrische Rohr 1 geschoben, und zwar so, daß die beiden Stirnflächen mit abgerundeten Kanten 7 einander gegenüber stehen. Danach werden die beiden Stützringe 4 in die jeweilige Nut 3 eingelegt und die Elektrode 6, die jetzt wegen zweier Bereiche lichter Weite nur noch teilweise über den Stützring 4 geschoben werden kann, bis zum Anschlag an demselben darüber geschoben. Über die lösbare Verbindungstechnik wird dieselbe an den zugehörigen Flansch 5 am metallischen Rohrende angekoppelt, dabei liegen die Stirnflächen des dielektrischen Rohrs 1 und die des Flansches 5 aneinander. Über den jeweiligen Stützring 4 und mittels des Flansches 5 wird die Stirn des ankommenden Metallrohrs an die Stirn des dielektrischen Rohrs 1 herangezogen, und zwar unter Einstellung einer Vorspannung, d.h. bei Raumtemperatur wird die Potentialtrennstrecke mit derartiger mechanischer Vorspannung eingebaut, daß im kryotechnischen Betrieb die vorgegebenen elektrischen und vakuumtechnischen Bedingungen (Betriebsdruck) bestehen.
Die lösbare Verbindungstechnik besteht vorteilhafterweise in Schraubverbindungen zwischen dem Flansch 5 und der Elektrode 6. Hierzu hat ersterer einen Lochkranz und zweitere einen Kranz aus Sackloch-Gewinden 8 mit entsprechendem Radius. Dadurch kann die elektrisch wichtige Stirnfläche der Elektrode 6 mit Ihrer Rundung problemlos aufrechterhalten werden. Über Schrauben 10 sind dann beide Flanschteile 5 gekoppelt (Anspruch 2).

Eine weitere Variante besteht darin, daß sich an der Elektrode 6 im rückwärtigen Bereich ein Innen- oder Außengewinde 11 befindet und am zu koppelnden Flansch 5 das Gegengewinde 12. Damit kann die Elektrode 6 bis zum Anpressen des Polyimidrohrs 1 aufgeschraubt werden (Anspruch 3).

Andrerseits kann die runde Stirnfläche der Elektrode 6 auch eine Ringnut haben, die so tief ist, daß einliegende Muttern an verbindenden Schrauben 10 nicht in den elektrisch problematischen Bereich ragen (Anspruch 4).

Die Elektroden 6 sind wegen der definierten elektrischen Geometrie zunächst metallisch, also elektrisch gut leitend, und wegen der notwendigen mechanischen Festigkeit vorteilhafterweise aus Edelstahl, das von der Verbindungstechnik mit dem Edelstahlrohrleitungssystem am einfachsten über Schweißtechnik zu verbinden ist. Da im Normalbetrieb zwischen beiden Elektroden 6 kein Strom fließt, kann man auf elektrisch sehr gut leitende Flansche aus Kupfer oder dergleichen verzichten.

Der Aufbau der elektrischen Trennstrecke erfordert keine Wickeltechnik, die nur von erfahrenen Spezialisten zuverlässig betrieben werden kann. Es genügt die maßgenaue Herstellung des dielektrischen Rohres 1 und der beiden Elektroden 6 auf einer spanabhebenden Maschine. Das kann ein Drehautomat zum Abstechen von Rohrteilen sein. Damit ist eine Massenfertigung im industriellen Rahmen gegeben. Der Zusammenbau des Potentialtrenners - rotationssymmetrische Kraftkopplung der Flanschteile - und der Einbau in die Rohrführung des Kühlsystems erfolgt ohnehin durch geschulte Kräfte mit der üblich gebotenen Sorgfalt. Die Dichtfunktion an den Stirnflächen der Komponenten ist in den Aufbau integriert. Damit entfallen an diesen Flächen zusätzliche Dichtungen. Polyimid ist zudem ein Material, aus dem Flachdichtungen für kryogene Anwendungen (1,8 bis 223 K) hergestellt werden.

Hohe Flexibilität bei wechselnden Anforderungen hinsichtlich Spannung, Druck, Temperatur und Nennweite des Rohrsystems wird erreicht. Bei bekannter Nennweite der Rohrführung des Kühlsystems, in dem die Potentialtrenner eingesetzt werden, können die Elektroden 6 auf Vorrat gefertigt werden. Die dielektrische Rohrlänge ist einzig abhängig vom aufrecht zu erhaltenden Potentialunterschied zwischen den beiden Elektroden 6 und der dielektrischen Festigkeit der Isoliermedien (Feststoff des Isolierrohrs, kryogene Flüssigkeit bzw. Zweiphasengemisch, Einbettungsmedium i. a. Vakuum). Eine Nachbearbeitung des Isolators durch Schleifen und Lackieren wie. beim gewickelten GFK-Isolator entfällt.

Bei Beschränkung auf die bevorzugt eingesetzten Nennweiten der Rohrführung des Kühlsystems (Hauptwerte aus der bestimmten Grundreihe der Normzahlen: DIN 323) kann aufgrund der geringen Anzahl der Einzelkomponenten (Isolierrohr, Elektrodenteile als Flansch) der Bedarf an Elektroden mit Rohrflanschanschluß und Isolierrohr als Halbzeug abgedeckt werden. Schließlich ist der Potentialtrenner als solcher auch bei Raumtemperatur einsetzbar.

Die Erfindung wird im folgenden an Hand der Zeichnung näher beschrieben. Die Zeichnung besteht aus den Figuren 1 bis 3, sie zeigen: Figur 1 den Potentialtrenner mit Loch- und Sacklochkranz, Figur 2 den Potentialtrenner mit aufschraubbarem, losen Teil, Figur 3 den Potentialtrenner in Perspektive.

Das konfektionierte dielektrische Rohrstück, der Potentialtrenner, besteht aus kommerziell erhältlichen Polyimidrohr 1, an dessen beiden Endbereiche die metallischen Rohre über den jeweiligen Flansch 5 aus Edelstahl koppeln. Das an das Rohrende angeschweißte und damit mit diesem unlösbar verbundene Flanschteil 5 liegt mit seiner Stirn an der Stirn des Polyimidrohres 1 an. Beide plane Stirnflächen werden über die Schraubverbindung aneinander gezogen, dabei wird der Kraftschluß rotationssymmetrisch eingehalten und mit der vorgegebenen Vorspannung eingestellt.

Beide Stirnseiten sind hinreichend plan, so daß dort eine Dichtringeinlage entfallen kann. Das bewegliche Teil der Elektrode 6 hat einen Kranz aus Sacklöchern, d. h. die sich gegenüberliegenden Stirnflächen der beiden Elektroden 6 sind einbuchtungslos rund. Hierdurch wird bei geringen fertigungstechnischen Anforderungen i. a. ein unter hochspannungstechnischer Sicht hinreichender Homogenitätsgrad der Geometrie erreicht. Der Stützring 4 in der jeweiligen Ringnut 3 im Endbereich am Außenmantel ist der andere Ankerbereich des Flansches 5 oder der Ankerbereich des losen Teils, wodurch die Vorspannung mit der Trennstrecke eingestellt und aufrecht erhalten werden kann. Die eingezeichneten Maße sind beispielhaft für einen bestimmten Spannungsfall, sie unterscheiden sich von Fall zu Fall.

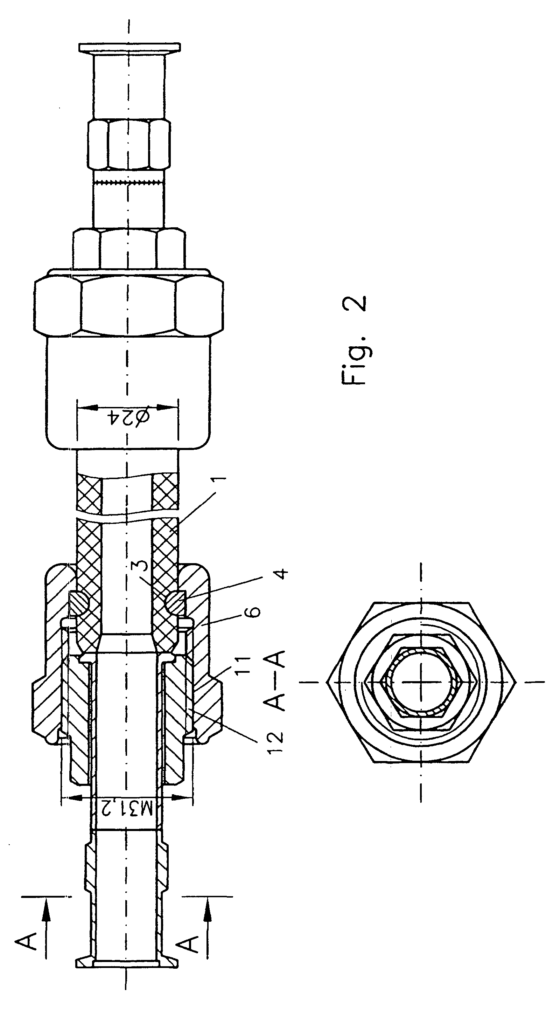

Figur 2 zeigt die Variante, daß die Elektrode 6 an ihrem zum koppelnden Flansch 5 gerichteten Endbereich ein Innengewinde hat und am Flansch 5 ein Außengewinde ist. Damit kann die Elektrode 6 aufgeschraubt und die betreffende Stirn des Polyimidrohrs 1 vorgegeben angepreßt werden.

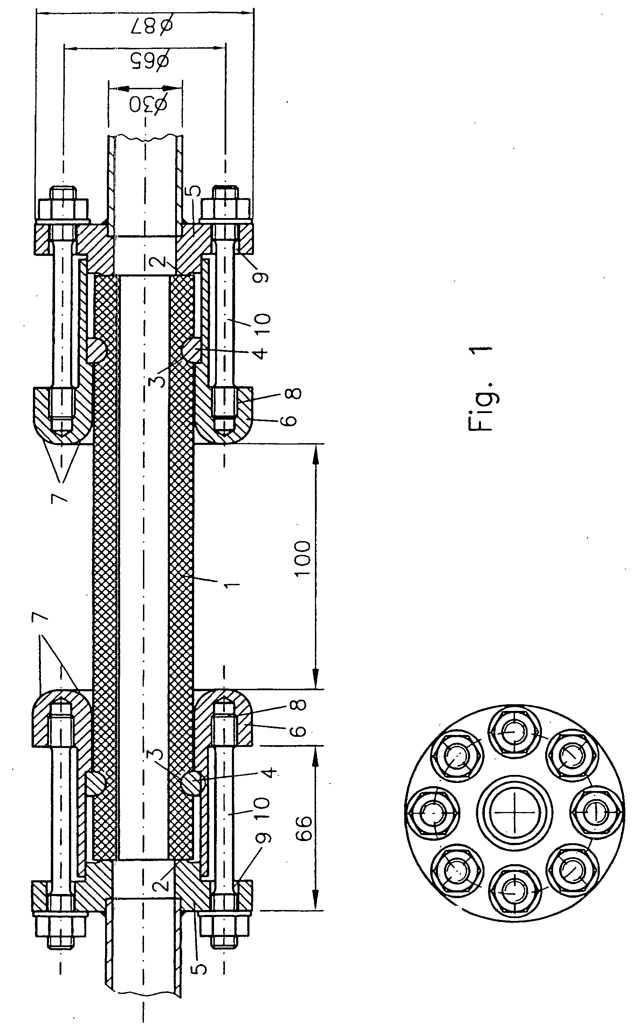

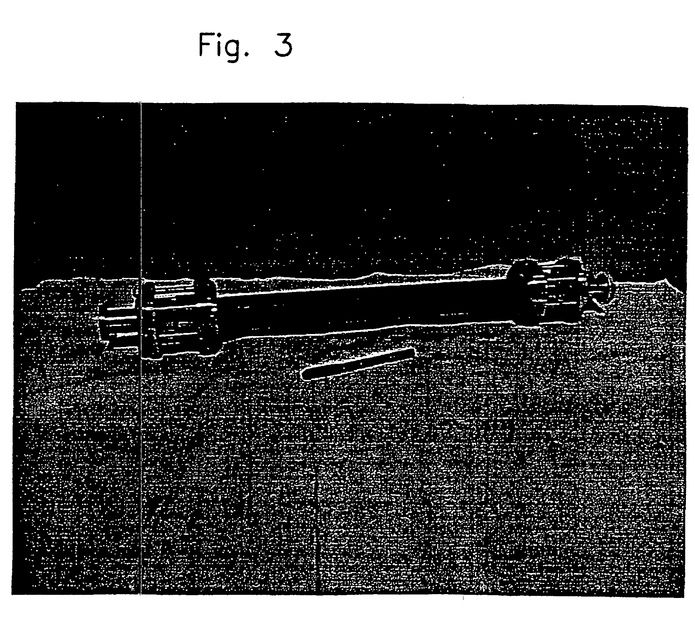

Figur 3 zeigt den Potentialtrenner zusammengebaut in Perspektive gemäß Figur 1.

### Bezugszeichenliste

- 1: dielektrisches Rohrstück, Polymidrohr
- 2: Stirnseite
- 3: Ringnut
- 4: Stützring
- 5: Flansch
- 6: Elektrode
- 7: Kante
- 8: Sackloch-Gewinde
- 9: Durchgangsloch
- 10: Schraube
- 11: Außen-/Innengewinde
- 12: Gegengewinde

## Patentansprüche

1. Kühlsystems einer kryotechnischen, heliumgekühlten Anlage mit einer metallischen Rohrführung und einem axialen Potentialtrenner aus einem dielektrischen Rohrstück in der Rohrführung zur Verhinderung der Ausbildung unerwünschter elektrischer Strompfade,
**dadurch gekennzeichnet, dass**
das dielektrische Rohrstück (1) plane Stirnseiten (2) hat und aus bei der Temperatur von flüssigem Helium noch abdichtendem Material, Polyimid, ist,
sich im jeweiligen Endbereich des dielektrischen Rohrstücks (1) auf der äußeren Mantelfläche eine Ringnut (3) zur Einlage eines Stützrings (4) befindet,
zwei über das dielektrische Rohrstück (1) zu verbindende, mit je einem Flansch (5) versehene metallische Rohrenden der metallischen Rohrführung ankoppeln,
wobei jeder Flansch (5) mittels je einer über das dielektrische Rohrstück (1) geschobenen hülsenförmigen Elektrode (6) an die zugewandte Stirn des dielektrischen Rohrstücks (1) gezogen wird,
die beiden hülsenförmigen Elektroden (6) zur Vermeidung von elektrischen Feldstärkespitzen je eine ebene Stirn mit abgerundeten Kanten (7) haben, die im Einbau einander auf dem dielektrischen Rohrstück (1) unter Einhaltung des elektrisch mindestens notwendigen Abstands gegenüberliegen,
die beiden hülsenförmigen Elektroden (6) je zwei Bereiche unterschiedlicher lichter Weite haben:
einen engeren, von der abgerundeten Stirn ausgehend, und
einen weiteren anschließenden,
wobei die engere lichte Weite derart ist, daß ein Aufschieben auf das dielektrische Rohrstück (1) möglich ist, jedoch ein Abziehen zur vorgesehenen Koppelseite wegen des in der Ringnut (3) liegenden Stützrings (4) nicht mehr, und die weitere derart ist, daß der eingelegte Stützring (4) die übergeschobene Elektrode (6) gleichzeitig zentriert, wodurch der Flansch (5) mit einstellbarer Vorspannung über die zugehörige hülsenförmige Elektrode (6) an die zugewandte Stirnseite des dielektrischen Rohrstücks (1) gezogen werden kann.

2. Kühlsystems nach Anspruch 1, **dadurch gekennzeichnet, dass** die beiden gerundeten Kanten (7) an der Elektrode (6) zusammenfallen, in derselben ein Kranz aus gleichverteilten Sackloch-Gewinden (8) ist und im Flansch (5) ein Kranz gleichen Durchmessers aus entsprechend gleichverteilten Durchgangslöchern (9) ist, wodurch eine lösbare Kopplung mittels Schrauben (10) besteht.

3. Kühlsystems nach Anspruch 1, **dadurch gekennzeichnet, dass** die beiden gerundeten Kanten an jeder Elektrode (6) zusammenfallen, am rückwärtigen Endbereich ein Innen- oder Außengewinde (11) und am zugehörigen Flansch (5) ein Gegengewinde ist (12), wodurch eine lösbare Kopplung durch gegenseitiges Verschrauben besteht.

4. Kühlsystems nach Anspruch 1, **dadurch gekennzeichnet, dass** zwischen den beiden gerundeten Kanten an der Elektrode (6) eine Ringnut ist, an deren Boden gleichverteilt Durchgangslöcher sind, die ein Innengewinde haben oder nicht, und sich im Flansch (5) ein gleichartiger Kranz aus Durchgangslöchern befindet, wodurch eine lösbare Kopplung mittels Schrauben (10) besteht.

## Claims

1. Cooling system of a cryotechnical, helium-cooled facility with metal piping and an axial potential isolator that consists of a dielectric pipe section in the piping to prevent the formation of undesired electric current paths,
**characterized by**
the dielectric pipe section (1) having flat ends (2) and being made of polyimide, a material that still has sealing properties at the temperature of liquid helium,
a ring groove (3) being provided at the respective end of the dielectric pipe section (1) on the outer lateral surface for the insertion of a back-up ring (4),
two metal pipe ends of the metal piping being connected via the dielectric pipe section (1) using a flange (5) each,
with each flange (5) being drawn to the nearest end of the dielectric pipe section (1) by means of a sleeve-shaped electrode (6) that is slid over the dielectric pipe section (1),
both sleeve-shaped electrodes (6) having a flat front surface with rounded-off edges (7) to prevent electric field peaks and these front surfaces being located opposite to each other on the dielectric pipe section (1) with the minimum required distance,
both sleeve-shaped electrodes (6) having two areas of varying clear widths:
A narrower area that starts from the rounded-off surface and a wider area that is adjacent to it,
with the narrower clear width allowing for sliding the electrode onto the dielectric pipe section (1), but preventing its withdrawal towards the coupling side through the back-up ring (4) that is located in the ring groove (3), and
the wider area being such that the inserted back-up ring (4) simultaneously centers the slid-over electrode (6), as a result of which the flange (5) may be drawn to the nearest end of the dielectric pipe section (1) with a pre-stress that can be adjusted via the corresponding sleeve-shaped electrode (6).

2. Cooling system according to Claim 1, **characterized by** both rounded-off edges (7) meeting at the electrode (6), the latter being provided with a belt of homogeneously distributed tapped blind holes (8) and the flange (5) having a belt of the same diameter of accordingly homogeneously distributed through-holes (9), which may be connected in a detachable manner by screwing (10).

3. Cooling system according to Claim 1, **characterized by** both rounded-off edges (7) meeting at each electrode (6), the rear end section being provided with an internal or external thread (11) and the respective flange (5) being equipped with a counter-thread (12), which may be connected in a detachable manner by screwing.

4. Cooling system according to Claim 1, **characterized by** a ring groove being located between both rounded-off edges at the electrode (6), at the bottom of which through-holes are distributed homogeneously, which have or do not have an internal thread, and the flange (5) being provided with a belt of through-holes of a similar type, which may be connected in a detachable manner by screwing (10).

## Revendications

1. Circuit de refroidissement d'une installation cryotechnique, refroidie à l'hélium, constitué d'une conduite métallique et d'un séparateur de potentiel axial, d'un tronçon diélectrique dans la conduite pour empêcher la formation de trajets de courant électrique indésirables,
**caractérisé en ce que**
le tronçon de conduite (1) possède des faces planes (2) et qu'il est en polyimide, matériau réalisant l'étanchéité même à la température de l'hélium liquide,
qu'une gorge annulaire (3) disposée pour y insérer une bague d'appui se trouve à l'extrémité respective du tronçon de conduite (1) sur la surface extérieure de l'enveloppe,
deux extrémités de conduite métalliques de la conduite métallique, disposées chacune d'une bride, à relier à travers le tronçon de conduite diélectrique (1), sont accouplées,
chaque bride (5) étant tirée vers la face du tronçon diélectrique (1) tournée vers l'extérieur, à l'aide d'une électrode en forme de gaine (6) glissée sur chacun des tronçons diélectriques (1),
les deux électrodes en forme de gaine (6) servant à empêcher des pics d'intensité du champ électriques possèdent chacune une face plane aux arêtes arrondies (7) qui dans le montage sont opposées les unes aux autres sur le tronçon diélectrique (1) tout en respectant la distance minimale électriquement nécessaire,
les deux électrodes en forme de gaine (6) possèdent chacune deux section de largeur intérieur distinctes:
une section plus étroite, parant de la face arrondie, et une section plus large adjacente,
la largeur intérieure plus étroite étant conçue de telle façon qu'il est possible de l'enfiler sur le tronçon diélectrique (1), mais qu'il n'est plus possible de la retirer vers le côté de couplage prévu, en raison de la bague d'appui (4) insérée dans la gorge annulaire (3),
et de telle façon que la bague d'appui (4) insérée centre en même temps l'électrode (6) enfilée, permettant ainsi que la bride (5) à précontrainte réglable peut être tirée sur l'électrode en forme de gaine associée (6) vers la face du tronçon diélectrique (1) toumée vers l'extérieur.

2. Circuit de refroidissement selon la revendication 1, **caractérisé en ce que** les deux arêtes arrondies (7) coïncident sur l'électrode (6), que celle-ci comporte une couronne de trous-borgnes à équipartition (8) et que la bride (5) comporte une couronne de diamètre égal de trous de passages à équipartition correspondante (9), ce qui donne un couplage mobile à vis (10).

3. Circuit de refroidissement selon la revendication (1), **caractérisé en ce que** les deux arêtes arrondies coïncident sur chaque électrode (6), que sur l'extrémité arrière il se trouve un filetage intérieur ou extérieur (11) et que sur la bride associée (5) il se trouve un contre-filetage (12), ce qui donne un couplage mobile par vissage réciproque.

4. Circuit de refroidissement selon la revendication 1, **caractérisé en ce qu'**entre les deux arêtes arrondies sur l'électrode (6), il se trouve une gorge annulaire sur le fond de laquelle sont disposés des trous de passage à équipartition, équipés ou on d'un filetage intérieur, et que dans la bride (5) il se trouve une couronne de trous de passage de même nature ce qui donne un couplage mobile à vis (10).
